(19) Europäisches Patentamt

European Patent Office

Office européen des brevets

(11) **EP 0 580 062 B1**

(12) **EUROPÄISCHE PATENTSCHRIFT**

(45) Veröffentlichungstag und Bekanntmachung des Hinweises auf die Patenterteilung:
**07.01.1998 Patentblatt 1998/02**

(51) Int Cl.6: **C21D 9/42**, C22C 38/44

(21) Anmeldenummer: **93111173.6**

(22) Anmeldetag: **13.07.1993**

(54) **Verfahren zur Herstellung von dicken Panzerblechen**

Process for manufacturing of thick armour plates

Procédé pour la fabrication des plaques de blindage épaisses

(84) Benannte Vertragsstaaten:
**DE FR GB SE**

(30) Priorität: **21.07.1992 DE 4223895**

(43) Veröffentlichungstag der Anmeldung:
**26.01.1994 Patentblatt 1994/04**

(73) Patentinhaber: **Thyssen Stahl Aktiengesellschaft**
**47166 Duisburg (DE)**

(72) Erfinder:
• **Bobbert, Jochen, Dipl.-Ing.**
  **D-40885 Ratingen (DE)**
• **Kawalla, Rudolf, Dr. Dipl.-Ing.**
  **D-46119 Oberhausen (DE)**
• **Pircher, Hans, Dr. Dipl.-Ing.**
  **D-45481 Mülheim (DE)**
• **Sussek, Gerd, Dr. Dipl.-Ing.**
  **D-45481 Mülheim (DE)**
• **Weihrauch, Günter, Dr. Dipl.-Ing.**
  **D-79588 Efringen-Kirchen (DE)**

(74) Vertreter: **Cohausz & Florack Patentanwälte**
**Postfach 33 02 29**
**40435 Düsseldorf (DE)**

(56) Entgegenhaltungen:
EP-A- 0 142 042          EP-A- 0 423 004

• **C. W. WEGST "StahlschlUssel", 15. Auflage, 1989, VERLAG STAHLSCHL SSEL WEGST GMBH, Marbach**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Herstellung von Panzerblechen mit hoher Härte aus Brammen aus Stahl, bei dem die Brammen auf eine Enddicke über 50 mm warmgewalzt und anschließend gehärtet und ggf. angelassen werden.

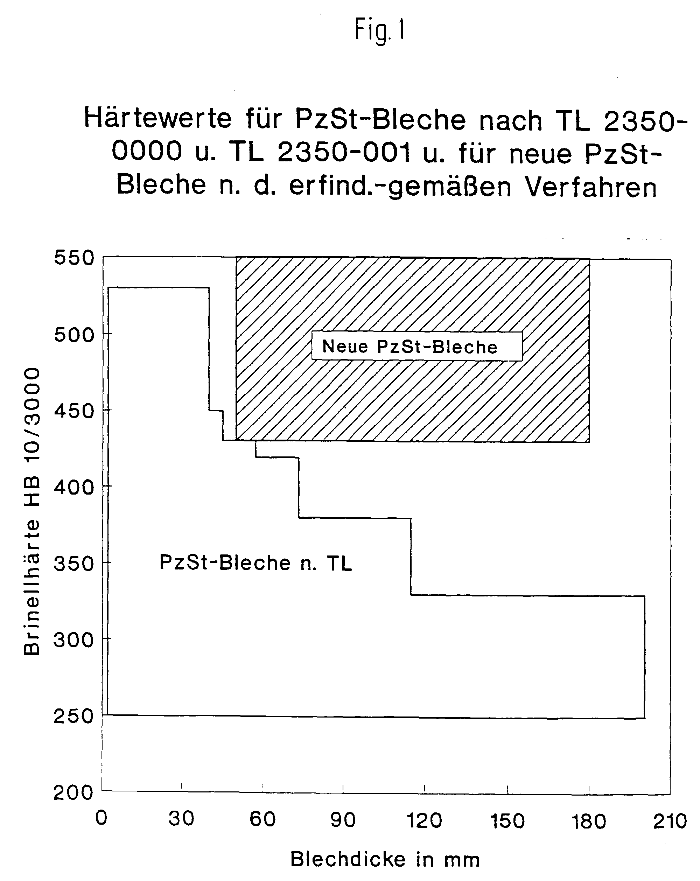

Die Herstellung von aus einem homogenen Werkstoff bestehenden Panzerblechen mit einer Enddicke über 50 mm ist bekannt. Um bei einem Beschuß die geforderte Sprungsicherheit, d.h. um ein unbefriedigendes großes Ausbrechen, ein Aufreißen oder ein Zersplittern solcher Panzerbleche zu vermeiden, sind bisher in der Praxis dickere Bleche nur mit vergleichsweise niedrigen und mittleren Härtegraden verwendet worden. So besitzen beispielsweise eingesetzte Panzerbleche mit einer Enddicke im Bereich von etwa 70 bis 115 mm eine Härte von maximal 380 HB. Panzerbleche mit einer Dicke im Bereich von 115 bis 200 mm haben eine Härte von maximal 330 HB, wie dies in Figur 1 anhand der den Blechdicken zugeordneten Härtewerte nach den BWB, Technische Lieferbedingungen Panzerstahl, TL 2350-001, April 1980 und TL 2350-0000, Nov. 1990, dargestellt ist.

Eine bekannte Maßnahme zur Verbesserung der Beschußfestigkeit von Panzerungen besteht darin, Panzerbleche aus einem homogenen Werkstoff in der Weise herzustellen, daß durch eine entsprechende Anlaßglühbehandlung die Oberseite und die Unterseite der Bleche unterschiedliche Härte annehmen (DE 32 09 531 A1).

Auch ist die Herstellung von Panzerblechen erhöhter Beschußfestigkeit aus nicht homogenen Werkstoffen bekannt, indem zwei oder mehrere Stähle unterschiedlicher Härtbarkeit durch Plattieren miteinander verbunden werden (EP-A1 0 142 042). Durch eine entsprechende Wärmebehandlung wird bei diesen Zweilagenstählen einer bevorzugten Enddicke von weniger als 20 mm, vorzugsweise kleiner 15 mm, der einen, meist dem Beschuß zugewandten Seite eine hohe Härte von bis zu 720 HB, der anderen Seite eine Härte von bis zu 520 HB verliehen. Dabei gewährleistet der vergleichsweise weniger harte Teil (Grundwerkstoff) das Einhalten der geforderten Sprungsicherheit, während der harte Teil (Auflage) zu einer Erhöhung der Beschußsicherheit führen soll. Auch plattierte Panzerbleche mit hohen Härtegraden werden in der Praxis vorzugsweise nur in Blechdicken bis zu etwa 40 mm eingesetzt.

Eine weitere Maßnahme zur Verbesserung der Beschußfestigkeit von Panzerungen besteht darin, daß diese mehrschichtig aus bekannten homogenen oder plattierten Panzerblechen, vorzugsweise mit einer Enddicke bis zu 40 mm, aufgebaut werden. Dies geschieht in kompakter Form ohne Zwischenräume entweder als Lamellenpanzerung aus mehreren Stahlblechen oder als Verbundpanzerung aus Stahlblechen in Kombination mit anderen metallischen oder nichtmetallischen Werkstoffen, oder in schottenartiger Form mit Zwischenräumen aus schutztechnisch weniger bzw. nicht relevanten Stoffen (DE 40 31 550 A1). Kompakte oder schottenartige Verbundpanzerungen sind in der Regel sehr komplex im Aufbau und wegen der zum Teil kostenintensiven Nichteisen-Werkstoffe auch teuer in Relation zum erreichten Schutzgewinn bzw. zur tatsächlich erreichten Verbesserung der Beschußfestigkeit.

Der Erfindung liegt nun die Aufgabe zugrunde, ein Verfahren zur Herstellung von Panzerblechen mit einer Enddicke über 50 mm und einer Härte von mehr als 430 HB, vorzugsweise mit einer Härte von mehr als 400 HB bei einer Enddicke über ca. 75 mm, zu schaffen, um die Beschußfestigkeit von daraus hergestellten Panzerungen zu verbessern.

Erfindungsgemäß wird diese Aufgabe bei dem gattungsgemäßen Verfahren dadurch gelöst, daß zunächst eine Stranggußbramme bestehend

- aus einem Stahl mit

0,25 bis 0,32 % C
0,05 bis 0,75 % Si
0,10 bis 1,50 % Mn
0,90 bis 2,00 % Cr
0,10 bis 0,70 % Mo
1,20 bis 4,50 % Ni
0,01 bis 0,08 % Al
max. 0,015 % P
max. 0,005 % S
max. 0,012 % N

wahlweise eine oder mehrere der Komponenten

0,001 bis 0,004 % B
max. 0,10 % Ti
max. 0,050 % Nb
max. 0,10 % V,
Rest Fe, einschließlich üblicher Verunreinigungen

erzeugt wird,

- anschließend auf eine Temperatur von 1.150 °C oder höher erwärmt und durcherwärmt wird,

- im Anschluß daran nach einer Abkühlung auf eine Oberflächentemperatur von weniger als 1.050 °C an Luft und durch Bespritzen ihrer beiden Breitseiten mit Druckwasser

- bei einer Oberflächentemperatur im Bereich von 1.050 bis 900 °C mit Umformstichen, die eine Einzelformänderung von $\varepsilon_h > 0{,}1$ haben,

und mit einem Shape-Faktor SF > 0,40, vorzugsweise > 0,50, bis auf die Enddicke warmgewalzt wird. Der Stahl kann legiert sein mit

0,001 bis 0,004 % B
max. 0,10 % Ti
max. 0,050 % Nb
max. 0,10 % V,

einzeln oder zu mehreren. Dabei sollte vorzugsweise der Titangehalt im Stahl nach Maßgabe der Beziehung

$$\% \, Ti = (3 \text{ bis } 7) \times \% \, N,$$

vorzugsweise

$$\% \, Ti = (4 \text{ bis } 7) \times \% \, N$$

auf den jeweiligen Stickstoffgehalt abgestimmt sein, um diesen weitestgehend abzubinden.

Die Enddicke des Panzerbleches nach dem Warmwalzen der Stranggußbramme liegt im Bereich von über 50 bis 200 mm, vorzugsweise bis 180 mm. Die Dicke der Stranggußbramme sollte das Aufbringen von mindestens drei erfindungsgemäßen Umformstichen zum Erreichen der Enddicke des daraus gewalzten Panzerbleches zulassen. Ferner sollten die letzten der aufgebrachten Umformstiche bevorzugt mit höchstmöglichen Einzelformänderungen durchgeführt werden. Nach dem erfindungsgemäßen Verfahren werden daher bei der Herstellung von Panzerblechen mit einer Dicke in dem Bereich von ca. 50 bis 100 mm die letzten Umformstiche vorzugsweise mit Einzelformänderungen von bis zu $\varepsilon_h = 0{,}2$ und größer durchgeführt.

Bevorzugt wird die Stranggußbramme auf eine Temperatur im Bereich von 1.150 bis 1.300 °C erwärmt und durcherwärmt. Im Anschluß daran erfolgt die erfindungsgemäße Abkühlung der durcherwärmten Stranggußbramme an Luft und durch ein Bespritzen ihrer beiden Breitseiten mit Druckwasser auf eine Oberflächentemperatur von weniger als 1.050 °C. Vorzugsweise geschieht diese Abkühlung in der Weise, daß die Durcherwärmungstemperatur ausgehend von der Oberfläche der beiden Brammen-Breitseiten ab einer Tiefe von mehr als 1/8 der Brammendicke bis maximal 1/4 der Brammendicke erhalten bleibt. Hierdurch entstehen auf beiden Breitseiten der Stranggußbramme zwei festere Schalen mit einem inneren weicheren Kern. Dies bedeutet, daß durch diese erfindungsgemäß bevorzugte Abkühlung der Bramme vor dem Warmwalzen die Dicke der beiden äußeren festeren Schalen jeweils im Bereich von 1/8 bis 1/4 der Brammendicke liegt. Beim nachfolgenden erfindungsgemäßen Warmwalzen werden dadurch in besonders vorteilhafter Weise die angestrebte hohe Härte und eine optimale Durchformung des Brammen- und damit Blechkernes erreicht.

Wesentlich bei dem erfindungsgemäßen Verfahren ist, daß die Panzerbleche aus den Stranggußbrammen mit möglichst wenigen Umformstichen mit einer möglichst großen Einzelformänderung

$$\varepsilon_h = (h_o - h_1) / h_o$$

und mit einem möglichst großen Shape-Faktor SF > 0,40, vorzugsweise > 0,50, als Maß für die Umformverteilung über die Brammendicke mit

$$SF = \frac{2\sqrt{R\,(h_o - h_1)}}{h_o + h_1}$$

$h_o =$     Walzgutdicke vor jedem Umformstich

$h_1 =$     Walzgutdicke nach jedem Umformstich

$R =$     Walzenradius

warmgewalzt werden. Zwischen den Umformstichen sind Glättstiche mit einer Formänderung $\varepsilon_h$ in der Größenordnung von 0,05 und vorzugsweise weniger zur Feineinstellung von Blechbreite, Ebenheit und Enddicke zugelassen.

Das reversierende Warmwalzen der Panzerbleche erfolgt ohne Pause. Erforderlichenfalls kann die Oberflächentemperatur des Walzgutes zwischen den einzelnen Umformstichen jeweils durch Luft und/oder durch Spritzwasser in dem geforderten Temperaturbereich von 1.050 bis 900 °C gehalten werden. Dies bedeutet, daß die Oberflächentemperatur während des gesamten Warmwalz-Vorganges in diesem Bereich liegt.

Das auf Enddicke fertiggewalzte Panzerblech sollte nach dem Abkühlen auf Raumtemperatur durch Wiedererwärmen auf oberhalb Ac3 und Abschrecken mit einer Geschwindigkeit von $\geq$ 1 K/s in Öl oder Wasser gehärtet werden.

Durch eine Anlaßglühbehandlung im Temperaturbereich von 100 bis 500 °C kann die Härte im Bereich von 400 bis 550 HB, im Temperaturbereich von 100 bis 400 °C vorzugsweise in dem Bereich von 430 bis 550 HB, eingestellt werden. Dabei ist die eingestellte Härte abhängig von der für die Anlaßglühbehandlung gewählten Temperatur.

Figur 1 zeigt mit dem schraffierten Bereich, wo sich vorzugsweise ein nach dem erfindungsgemäßen Verfahren erzeugtes Panzerblech im Hinblick auf seine Dicke und Härte in einem Diagramm ansiedelt, welches die Brinellhärte in Abhängigkeit von der Blechdicke für herkömmliche Panzerbleche darstellt. So wurden bisher hohe Härtewerte nur bei verhältnismäßig dünnen Blechen unter 50 mm Dicke erreicht, während dickere Bleche immer mit niedrigerer Härte zwischen 250 und maximal 430 HB erzeugt und eingesetzt wurden. Von diesen bekannten Panzerblechen setzt sich das nach dem erfindungsgemäßen Verfahren hergestellte Blech durch die Kombination von hoher Härte (größer 400 HB, insbesondere größer 430 HB) mit großer Blechdicke (größer 50 mm bzw. 75 mm) deutlich ab.

Nach dem erfindungsgemäßen Verfahren wurden zwei Stahlschmelzen A und B mit der chemischen Zusammensetzung nach Tabelle 1 hergestellt. Die Tabelle 2 weist für jeweils zwei Versuche mit den beiden Stahlschmelzen A und B als Fertigungsparameter die Dicke der erzeugten Stranggußbramme, die Durcherwärmungstemperatur , die Abkühlbehandlung an der Oberfläche der durcherwärmten Stranggußbramme kurz vor dem Warmwalzen und den Walzenradius aus. Ferner sind in Tabelle 2 zu den einzelnen Stichen beim Warmwalzen die Oberflächentemperatur, die jeweilige Dicke $h_1$ des Walzerzeugnisses, der sich daraus errechnende Einzelformänderungswert $\varepsilon_h$ und der Shape-Faktor SF enthalten.

In Tabelle 3 sind nach dem erfindungsgemäßen Verfahren hergestellte gehärtete Panzerbleche mit ihren nach dem Vergüten erzeugten mechanischen Eigenschaften, nämlich die an der Blechoberfläche gemessene Brinellhärte und die in Längs- und Querrichtung in Oberflächennähe und im Kern der aus den Schmelzen A und B gefertigten Panzerbleche aufgeführt. Die Bleche sind nach dem Härten bei einer Temperatur von 180 bis 250 °C angelassen worden, so daß sich eine hohe, möglichst nur wenig unter der Ansprunghärte liegende Härte eingestellt hat.

Die Ergebnisse machen deutlich, daß die erfindungsgemäßen Panzerbleche ein hohes Maß an Homogenität über die Blechdicke und an Isotropie längs und quer zur Walzrichtung aufweisen. Sie besitzen die angestrebte hohe Härte und die dementsprechende hohe Zugfestigkeit über die gesamte Blechdicke. Die an Oberfläche und Kern gemessenen Werte schwanken im Bereich der Meßgenauigkeit. Die mit Charpy-V Proben bei - 40 °C ermittelte Kerbschlagarbeit erreicht ein für Panzerstahlbleche dieser Härte ungewohnt hohes Niveau. Blechoberfläche und Blechkern zeigen Gleichmäßigkeit im Zähigkeitsverhalten. Die Eigenschaftsunterschiede längs und quer zur Walzrichtung sind sehr gering sowohl bezüglich Zugfestigkeit als auch in Bezug auf die Kerbschlagarbeit.

Die nach dem erfindungsgemäßen Verfahren hergestellten neuen homogenen Panzerbleche großer Dicke und hoher Härte sind in der Lage, die Beschußfestigkeit einschichtiger und insbesondere von mehrschichtig aufgebauten Panzerungen erheblich zu verbessern.

Wird die Eindringtiefe eines Geschosses in ein Lamellenziel aus konventionellen Panzerblechen beispielsweise mit 100 % gesetzt, so verringert sich die Eindringtiefe bei Verwendung der erfindungsgemäßen Panzerblechen um mindestens 20 %, in der Regel um 30 % und darüber.

Wie mit nach dem erfindungsgemäßen Verfahren hergestellten Panzerblechen mehrschichtig aufgebaute, kompakte und schottenartige Panzerungen zeigen, erhöht sich die Beschußfestigkeit und damit Schutzwirkung solcher Panzerungen insbesondere dann, wenn bei gleicher Enddicke der Panzerung bezogen auf die Einzelbleche nicht nur zu größeren Blechdicken, sondern gleichzeitig auch zu höheren Härtegraden übergegangen wird.

Die Qualität einer Panzerung entscheidet sich in der Kombination Masse und Raum. Die neuen dicken Panzerbleche hoher Härte bieten als solche oder in Kombination mit anderen Werkstoffen einfache und vergleichbar kostengünstige Möglichkeiten für wirksame Schutzaufbauten gegen die unterschiedlichsten Arten schwerer Bedrohungen sowohl mit Wuchtgeschossen als auch mit geformten Ladungen. Aufgrund der neuartigen Materialqualität, die sich bei der hochdynamischen Belastung durch Beschuß besonders zeigt, können erheblich leichtere Konstruktionen bei gleichbleibender Beschußfestigkeit realisiert werden. Gleichzeitig werden geringstmögliche Bautiefen ausführbar.

## Tabelle 1

| Schmelze | Schmelzanalyse (Massenanteile in %) | | | | | | | | | | | |
|---|---|---|---|---|---|---|---|---|---|---|---|---|
| | C | Si | Mn | P | S | Cr | Ni | Mo | N | Al | B | Ti |
| A | 0,27 | 0,19 | 0,26 | 0,008 | 0,001 | 1,38 | 3,52 | 0,40 | 0,004 | 0,050 | - | - |
| B | 0,30 | 0,20 | 0,23 | 0,011 | 0,001 | 1,35 | 3,46 | 0,40 | 0,005 | 0,026 | 0,002 | 0,03 |

# Tabelle 2

## Walzdaten

| Schmelze: | B | | | | A | | | | A | | | | B | | | |
|---|---|---|---|---|---|---|---|---|---|---|---|---|---|---|---|---|
| Wärmtemperatur: | 1200°C | | | | 1180°C | | | | 1230°C | | | | 1150°C | | | |
| Brammenkühlung: | 20s/L+4s/W+20s/L | | | | 20s/L+5s/W+40s/L | | | | 20s/L+5,5s/W+20s/L | | | | 20s/L+5s/W+40s/L | | | |
| Oberflächentemp. nach dem Kühlen: | 1010°C | | | | 1020°C | | | | 980°C | | | | 980°C | | | |
| Brammendicke: | 260 mm | | | | 255 mm | | | | 255 mm | | | | 260 mm | | | |
| Blechdicke: | 70 mm | | | | 90 mm | | | | 100 mm | | | | 120 mm | | | |
| Walzenradius R = | 450 mm | | | | 450 mm | | | | 450 mm | | | | 450 mm | | | |
| Stich | T °C | h mm | $\varepsilon$ h | S.F. | T °C | h mm | $\varepsilon$ h | S.F. | T °C | h mm | $\varepsilon$ h | S.F. | T °C | h mm | $\varepsilon$ h | S.F. |
| 1 | 1029 | 232,0 | 0,107 | 0,45 | 1036 | 244,1 | (0,042) | | 1007 | 249,6 | (0,039) | | 1000 | 229,1 | 0,101 | 0,44 |
| 2 | 1023 | 205,9 | 0,112 | 0,49 | 990 | 210,9 | 0,136 | 0,53 | 1029 | 221,1 | 0,114 | 0,48 | 977 | 204,3 | 0,108 | 0,43 |
| 3 | 1020 | 201,9 | (0,019) | | 990 | 181,4 | 0,139 | 0,58 | 1029 | 190,9 | 0,136 | 0,56 | 977 | 174,3 | 0,146 | 0,61 |
| 4 | 1025 | 181,7 | 0,100 | 0,49 | 965 | 151,7 | 0,163 | 0,69 | 1013 | 161,5 | 0,154 | 0,65 | 977 | 144,7 | 0,169 | 0,72 |
| 5 | 1007 ' | 162,5 | 0,105 | 0,54 | 965 | 122,3 | 0,193 | 0,83 | 1013 | 130,5 | 0,191 | 0,80 | 977 | 124,0 | 0,143 | 0,7* |
| 6 | 1004 | 136,9 | 0,157 | 0,71 | 965 | 99,6 | 0,185 | 0,91 | 1026 | 109,4 | 0,161 | 0,81 | | | | |
| 7 | 1002 | 106,8 | 0,219 | 0,95 | 985 | 93,7 | (0,059) | | 921 | 102,9 | (0,059) | | | | | |
| 8 | 1000 | 77,0 | 0,279 | 1,26 | | | | | | | | | | | | |
| 9 | 994 | 72,1 | (0,063) | | | | | | | | | | | | | |
| 10 | | | | | | | | | | | | | | | | |
| 11 | | | | | | | | | | | | | | | | |
| 12 | | | | | | | | | | | | | | | | |

L = Luftabkühlung, W = Druckwasserabkühlung; ( ) = Glättstich

EP 0 580 062 B1

# Tabelle 3

## Mechanische Eigenschaften nach dem Vergüten [1]

| Schmelze | Blechdicke | Härte HB | Oberfläche | | | | Kern | | | |
|---|---|---|---|---|---|---|---|---|---|---|
| | | | Längs | | Quer | | Längs | | Quer | |
| | | | Rm* | Av** | Rm* | Av** | Rm* | Av** | Rm* | Av** |
| B | 70 mm | 510 | 1665 | 29 | 1700 | 25 | 1650 | 29 | 1695 | 35 |
| A | 90 mm | 485 | 1610 | 48 | 1605 | 40 | 1590 | 45 | 1605 | 37 |
| A | 100 mm | 480 | 1595 | 50 | 1600 | 45 | 1565 | 39 | 1590 | 38 |
| B | 120 mm | 500 | 1680 | 35 | 1685 | 33 | 1725 | 29 | 1615 | 27 |

[1] Anlaßtemperatur: 180 bis 250°C

\* Rm: Zugfestigkeit (N/mm²) ermittelt an Normproben B 10 x 50

\*\* Av: Kerbschlagarbeit (J) ermittelt an Charpy-V-Proben bei -40°C

EP 0 580 062 B1

**Patentansprüche**

1. Verfahren zur Herstellung von Panzerblechen mit hoher Härte aus Brammen aus Stahl, bei dem die Brammen auf eine Enddicke über 50 mm warmgewalzt und anschließend gehärtet und ggfs. angelassen werden, **dadurch gekennzeichnet,** daß zunächst eine Stranggußbramme bestehend

   - aus einem Stahl mit

     0,25 bis 0,32 % C
     0,05 bis 0,75 % Si
     0,10 bis 1,50 % Mn
     0,90 bis 2,00 % Cr
     0,10 bis 0,70 % Mo
     1,20 bis 4,50 % Ni
     0,01 bis 0,08 % Al
     max. 0,015 % P
     max. 0,005 % S
     max. 0,012 % N

     wahlweise eine odere mehrere der Komponenten

     0,001 bis 0,004 % B
     max. 0,10 % Ti
     max. 0,050 % Nb
     max. 0,10 % V,
     Rest Fe, einschließlich üblicher Verunreinigungen

     erzeugt wird,

   - anschließend auf eine Temperatur von 1.150 °C oder höher erwärmt und durcherwärmt wird,

   - im Anschluß daran nach einer Abkühlung auf eine Oberflächentemperatur von weniger als 1.050 °C an Luft und durch Bespritzen ihrer beiden Breitseiten mit Druckwasser

   - bei einer Oberflächentemperatur im Bereich von 1.050 bis 900 °C mit Umformstichen, die eine Einzelformänderung von $\varepsilon_h > 0,1$ haben, und mit einem Shape-Faktor SF > 0,40 bis auf die Enddicke warmgewalzt wird.

2. Verfahren nach Anspruch 1, **dadurch gekennzeichnet**, daß der Stahl legiert ist mit

     0,001 bis 0,004 % B
     max. 0,10 % Ti
     max. 0,050 % Nb
     max. 0,10 % V,

     einzeln oder zu mehreren.

3. Verfahren nach Anspruch 2, **dadurch gekennzeichnet**, daß der Titangehalt im Stahl nach Maßgabe der Beziehung:

   $$\% \text{ Ti} = (3 \text{ bis } 7) \times \% \text{ N},$$

   vorzugsweise

   $$\% \text{ Ti} = (4 \text{ bis } 7) \times \% \text{ N}$$

EP 0 580 062 B1

auf den jeweiligen Stickstoffgehalt im Stahl abgestimmt wird.

4. Verfahren nach Anspruch 1,
   **dadurch gekennzeichnet**, daß die Stranggußbramme auf eine Enddicke im Bereich von > 50 bis 200 mm, vorzugsweise bis 180 mm, warmgewalzt wird.

5. Verfahren nach Anspruch 1,
   **dadurch gekennzeichnet**, daß die Stranggußbramme auf eine Temperatur im Bereich von 1.150 bis 1.300 °C erwärmt und durcherwärmt wird.

6. Verfahren nach Anspruch 1,
   **dadurch gekennzeichnet**, daß die Stranggußbramme vor dem Warmwalzen derart oberflächlich abgekühlt wird, daß die Durcherwärmungstemperatur ausgehend von der Oberfläche der beiden Brammen-Breitseiten ab einer Tiefe von mehr als 1/8 der Brammendicke bis maximal 1/4 der Brammendicke erhalten bleibt.

7. Verfahren nach Anspruch 1,
   **dadurch gekennzeichnet**, daß das Warmwalzen mit einem Shape-Faktor SF > 0,50 durchgeführt wird.

8. Verfahren nach Anspruch 1,
   **dadurch gekennzeichnet**, daß das auf Enddicke fertiggewalzte Panzerblech nach dem Abkühlen auf Raumtemperatur durch Wiedererwärmen auf oberhalb Ac3 und Abschrecken mit einer Geschwindigkeit von $\geq$ 1 K/s in Öl oder Wasser gehärtet wird.

9. Verfahren nach einem der Ansprüche 1 bis 8,
   **dadurch gekennzeichnet**, daß das gehärtete Panzerblech bei einer Temperatur im Bereich von 100 bis 500 °C unter Einstellung der Härte im Bereich von 400 bis 550 HB angelassen wird.

10. Verfahren nach einem der Ansprüche 1 bis 8,
    **dadurch gekennzeichnet**, daß die Härte des Panzerbleches beim Anlaßvorgang bis zu einer Temperatur von 400 °C auf 430 bis 550 HB eingestellt wird.

Claims

1. A process for the production of very hard armour plates from steel slabs, wherein the slabs are hot rolled to a final thickness above 50 mm and then hardened and possibly tempered, characterized in that first a continuously cast slab is produced consisting

   - of a steel having

     0.25 to 0.32 % C
     0.05 to 0.75 % Si
     0.10 to 1.50 % Mn
     0.90 to 2.00 % Cr
     0.10 to 0.70 % Mo
     1.20 to 4.50 % Ni
     0.01 to 0.08 % Al
     max 0.015 % P
     max 0.005 % S
     max 0.012 % N

     optionally one or more of the components

     0,001 to 0,004 % B
     max 0,10 % Ti
     max 0,050 % Nb
     max 0,10 % V
     residue Fe, including usual impurities,

10

- the slab then being heated to a temperature of 1150°C or higher and heated through,
- whereafter following cooling in air and by the spraying of its two wide sides with pressurized water to a temperature below 1050°C
- the slab is hot rolled at a surface temperature in the range of 1050 to 900°C with shaping passes having an individual deformation of $\varepsilon_h$ > 0.1 and with a shape factor SF > 0.40 to the final thickness.

2. A process according to claim 1, characterized in that the steel is alloyed singly or in combination with

   0.001 to 0.004 % B
   max 0.10 % Ti
   max 0.050 % Nb
   max 0.10 % V.

3. A process according to claim 2, characterized in that the titanium content of the steel is adapted to its particular nitrogen content in accordance with the relation:

$$\% \text{ Ti} = (3 \text{ to } 7) \times \% \text{ N},$$

preferably

$$\% \text{ Ti} = (4 \text{ to } 7) \times \% \text{ N}.$$

4. A process according to claim 1, characterized in that the continuously cast slab is hot rolled to a final thickness in the range of > 50 to 200 mm, preferably to 180 mm.

5. A process according to claim 1, characterized in that the continuously cast slab is heated to a temperature in the range of 1150 to 1300°C and heated through.

6. A process according to claim 1, characterized in that prior to hot rolling the surface of the continuously cast slab is so cooled that, starting from the surface of the two wide sides of the slab, the through-heating temperature is maintained from a depth of more than 1/8 of slab thickness to a maximum 1/4 of slab thickness.

7. A process according to claim 1, characterized in that the hot rolling is performed with a shape factor SF > 0.50.

8. A process according to claim 1, characterized in that after cooling to room temperature, the armour plate finish rolled to the final thickness is hardened by reheating to above Ac3 and quenching at a rate of ≥ 1 K/sec in oil or water.

9. A process according to one of claims 1 to 8, characterized in that the hardened armour plate is tempered at a temperature in the range of 100 to 500°C, with hardness adjusted to the range of 400 to 550 HB.

10. A process according to one of claims 1 to 8, characterized in that during the tempering process the hardness of the armour plate was adjusted to 430 to 550 HB up to a temperature of 400°C.

**Revendications**

1. Procédé pour fabriquer des tôles de blindage de haute dureté à partir de brames en acier, dans lequel les brames sont laminées à chaud à une épaisseur finale de plus de 50 mm et, ensuite, trempées et éventuellement soumises à un revenu, caractérisé en ce qu'on produit tout d'abord une brame de coulée continue

   - à partir d'un acier comprenant

      0,25 à 0,32 % C
      0,05 à 0,75 % Si
      0,10 à 1,50 % Mn
      0,90 à 2,00 % Cr

0,10 à 0,70 % Mo
1,20 à 4,50 % Ni
0,01 à 0,08 Al

au maximum 0,015 % P
au maximum 0,005 % S
au maximum 0,012 % N

éventuellement, un ou plusieurs des constituants suivants
0,001 à 0,004 % B

au maximum 0,10 % Ti
au maximum 0,050 % Nb
au maximum 0,10 % V

le reste, Fe, y compris les impuretés habituelles
- ensuite on la réchauffe et on la chauffe à coeur à une température de 1150°C ou plus,
- ensuite, après un refroidissement à une température superficielle de moins de 1050°C, dans l'air ou par pulvérisation d'eau sous pression sur les deux grandes faces,
- on la lamine à chaud à une température superficielle de 1050 à 900°C, avec des passes de formage qui comportent une déformation élémentaire de $\varepsilon_h > 0,1$ et avec un Shape-factor SF > 0,40, de préférence > 0,50, jusqu'à obtenir l'épaisseur finale.

2. Procédé selon la revendication 1,
caractérisé en ce que l'acier est allié avec
0,001 à 0,004% B

au maximum 0,10 % Ti
au maximum 0,050 % Nb
au maximum 0,10 % V,

ajoutés isolément ou en combinaison.

3. Procédé selon la revendication 2,
caractérisé en ce que la teneur en titane dans l'acier est de préférence adaptée à la teneur en azote existante dans l'acier, selon la relation

$$\% \text{ Ti} = (3 \text{ à } 7) \times \% \text{ N}$$

de préférence

$$\% \text{ Ti} = (4 \text{ à } 7) \times \% \text{ N}$$

4. Procédé selon la revendication 1,
caractérisé en ce qu'on lamine la brame de coulée continue à chaud jusqu'à obtenir une épaisseur finale comprise dans l'intervalle de > 50 à 200 mm, de préférence égale à 180 mm.

5. Procédé selon la revendication 1,
caractérisé en ce qu'on réchauffe et qu'on chauffe à coeur la brame de coulée continue à une température de 1150 à 1300°C.

6. Procédé selon la revendication 1,
caractérisé en ce qu'on refroidit la brame de coulée continue en surface avant le laminage à chaud de telle manière que la température de chauffage à coeur reste maintenue, en partant de la surface des deux grandes faces de la brame, depuis une profondeur de plus de 1/8 de l'épaisseur de la brame jusqu'à 1/4 au maximum de l'épaisseur de la brame.

**7.** Procédé selon la revendication 1,
caractérisé en ce qu'on effectue le laminage à chaud avec un Shape-factor SF > 0,50.

**8.** Procédé selon la revendication 1,
caractérisé en ce qu'après le refroidissement jusqu'à la température ambiante, on trempe la tôle de blindage entièrement laminée à l'épaisseur finale par réchauffage à une température au-dessus de Ac3 et refroidissement brusque avec une vitesse ≥ 1 K/s dans l'huile ou dans l'eau.

**9.** Procédé selon une des revendications 1 à 8,
caractérisé en ce qu'on soumet la tôle de blindage trempée à un revenu à une température comprise dans l'intervalle de 100 à 500°C, avec réglage de la dureté dans l'intervalle de 400 à 550 HB.

**10.** Procédé selon une des revendications 1 à 8,
caractérisé en ce qu'on établit la dureté de la tôle de blindage sur une valeur de 430 à 550 HB, lors du processus de revenu jusqu'à une température de 400°C.

EP 0 580 062 B1

Fig. 1

# Härtewerte für PzSt-Bleche nach TL 2350-0000 u. TL 2350-001 u. für neue PzSt-Bleche n. d. erfind.-gemäßen Verfahren

14